# EUROPEAN PATENT SPECIFICATION

(11) **EP 3 089 556 B1**
(45) Date of publication and mention of the grant of the patent: **27.02.2019**
(21) Application number: 16167287.8
(22) Date of filing: 27.04.2016
(51) Int. Cl.: H05B 33/08, F21Y 115/10

(54) **ILLUMINATION LAMP, ILLUMINATION APPARATUS, AND ILLUMINATION CONTROL CIRCUIT**
BELEUCHTUNGSLAMPE, BELEUCHTUNGSVORRICHTUNG UND BELEUCHTUNGSSTEUERUNGSSCHALTUNG
LAMPE D'ÉCLAIRAGE, APPAREIL D'ÉCLAIRAGE ET CIRCUIT DE COMMANDE D'ÉCLAIRAGE

(30) Priority: 30.04.2015 JP 2015092645
(43) Date of publication of application: 02.11.2016
(73) Proprietor: Ricoh Company, Ltd., Tokyo 143-8555 (JP)
(72) Inventor: HOSHIKAWA, Sho, Tokyo 143-8555 (JP)
(74) Representative: SSM Sandmair

(56) References cited:
- WO-A1-2015/156633
- JP-A- H11 135 274
- JP-A- 2011 060 563
- JP-A- 2015 179 651
- KR-A- 20090 116 259

## Description

### BACKGROUND OF THE INVENTION

### 1. Field of the Invention

The present invention relates to an illumination lamp, an illumination apparatus, and an illumination control circuit.

### 2. Description of the Related Art

In recent years, illumination lamps using a light emitting diode (LED) (hereinafter also referred to as an LED illumination lamp) with features of low power consumption, long service life, and the like, have been drawing attention. An LED illumination lamp, having an output of an inverter ballast for fluorescent lamps as an input, is one of such illumination lamps and can be used in replacing a conventional fluorescent lamp.

It should be noted that there is an inverter ballast for fluorescent lamps which performs an anomaly detection at the startup, and does not allow a fluorescent lamp to be turned on by performing a protection operation when an anomaly is detected. When an LED illumination lamp is attached, replacing the fluorescent lamp, to the above described inverter ballast for fluorescent lamps, there may be a case where the LED illumination lamp is not turned on due to the protection operation.

The above case may be considered as follows. When a fluorescent lamp is used, current does not flow in the fluorescent lamp at the startup; but when an LED illumination is used, there is a case where current flows in the LED illumination lamp at the startup, an anomaly is detected by the inverter ballast for fluorescent lamps, and the protection operation is performed. Therefore, in order to connect an LED illumination lamp to an inverter ballast for fluorescent lamps, the above problem needs to be resolved.

As an example method for resolving the problem, a technique is known which includes a full-wave rectifier circuit for rectifying a high frequency from the inverter ballast; a smoothing capacitor connected to the full-wave rectifier circuit via an inductor element; and an LED unit connected to the smoothing capacitor. The technique includes setting an impedance of the inductor element to be a value sufficient for twice the high frequency from the inverter ballast for fluorescent lamps.

However, in the above technique, the inverter ballast for fluorescent lamps continues outputting a high voltage even after the inverter ballast for fluorescent lamps transitions to a stable operation, and thus, energy saving cannot be realized.

It is an object of the present invention to obviate the above problem, provide stable illumination when an illumination lamp with a light emitting diode is used by being connected to an inverter ballast for fluorescent lamps, and realize the energy saving.

JP 2011-060563 A describes an LED lighting device that reduces power consumption in case of the occurrence of an open failure in at least one of a plurality of serially connected light-emitting diodes, and an LED lighting method. The LED lighting device includes sidacs S1-Sn and pulse transformers PT1-PTn respectively disposed in pairs with the light-emitting diodes LED1-LEDn (n is an optional integer satisfying n>=5). The anode of a light-emitting diode LEDq is connected with one end of a sidac Sq (q is an optional integer satisfying 1<=q<=n), and a cathode of the light-emitting diode LEDq is connected with the other end of the sidac Sq via a primary winding of a pulse transformer PTq.

WO 2015/156633 A describes an LED lamp using a switching circuit, configured to prevent occurrence of electric shock caused by a contact of a conductive metal or the human body by arranging the switching circuit between a first rectifier circuit and an LED circuit. The disclosed LED lamp using a switching circuit connects the switching circuit to at least one line among a plurality of lines connecting a rectifier circuit and an LED circuit, wherein the switching circuit may comprise: a switching element comprising at least one from among an SCR, a TRIAC, a TR, and an FET; and a driving element comprising at least one from among a capacitor, a TVS, a ZENER, a SIDAC, a resistance, and an inductor.

KR 2009 0116259 A describes an apparatus for blocking a leakage current is provided to minimize the loss of the standby power by blocking a power supply path to both sides of a load when switching off the AC LED lighting device. A rectifier rectifies the commercial power from a power terminal. A first switch driver and a second switch driver are turned on and off based on an output signal of the rectifier. The first and second switch drivers include phototriac. A first semiconductor switching element is arranged between the first switching driver and one end of the load. The first semiconductor switching element forms a power supply path between the power terminal and one end of the load according to the on of the first switching driver. A second semiconductor switching element is arranged between the other end of the load and the second switching driver. The second semiconductor switching element forms the power supply path between the power terminal and the other end of the load according to the one of the second switching driver.

### [Citation List]

### [Patent Document]

[Patent Document 1] Japanese Laid-Open Patent Application No. 11-135274
[Patent Document 2] JP 2011-060563 A
[Patent Document 3] WO 2015/156633 A
[Patent Document 4] KR 2009 0116259 A

### SUMMARY OF THE INVENTION

The invention is defined by the subject-matter of independent claim 1. The dependent claims are directed to advantageous embodiments.

### ADVANTAGES OF THE INVENTION

Advantageously, an illumination lamp connectable to an inverter ballast for fluorescent lamps is provided. The illumination lamp includes a light emitting diode; a rectifier circuit configured to rectify an AC voltage supplied by the inverter ballast for fluorescent lamps and supply the rectified voltage to the light emitting diode; and a switching circuit configured to be in a non-conductive state when the rectified voltage from the rectifier circuit is less than a predetermined voltage and not allow current to flow in the light emitting diode, to switch to a conductive state when the rectified voltage from the rectifier circuit is equal to or greater than the predetermined voltage and allow the current to flow in the light emitting diode, and to continue in the conductive state even when the rectified voltage changes to be less than the predetermined voltage after switching to the conductive state.

Advantageously, stable illumination can be provided
when an illumination lamp with a light emitting diode is connected to an inverter ballast for fluorescent lamps.

Other features and advantages of the present invention will become more apparent from the following detailed description when read in conjunction with the accompanying drawings.

### BRIEF DESCRIPTION OF THE DRAWINGS

Fig. 1 is a perspective view illustrating an appearance of an illumination apparatus according to a first embodiment.
Fig. 2 is a cross-sectional view illustrating an illumination lamp according to the first embodiment.
Fig. 3 is a drawing illustrating circuit blocks of an illumination lamp according to the first embodiment.
Fig. 4 is a drawing illustrating circuit blocks of an illumination lamp according to a modified example 1 of the first embodiment.
Fig. 5 is a drawing illustrating circuit blocks of an illumination lamp according to a modified example 2 of the first embodiment.
Fig. 6 is a drawing illustrating circuit blocks of an illumination lamp according to a modified example 3 of the first embodiment.
Fig. 7 is a drawing illustrating circuit blocks of an illumination lamp according to a modified example 4 of the first embodiment.
Fig. 8 is a drawing illustrating circuit blocks of an illumination lamp according to a modified example 5 of the first embodiment.
Fig. 9 is a drawing illustrating a wire connection of major circuits of an illumination lamp according to the first embodiment.

### DETAILED DESCRIPTION OF THE PREFERRED EMBODIMENTS

In the following, embodiments of the present invention will be described referring to the drawings. In each of the drawings, the same numeral is assigned to the same element and a duplicated description may be omitted.

### <First embodiment>

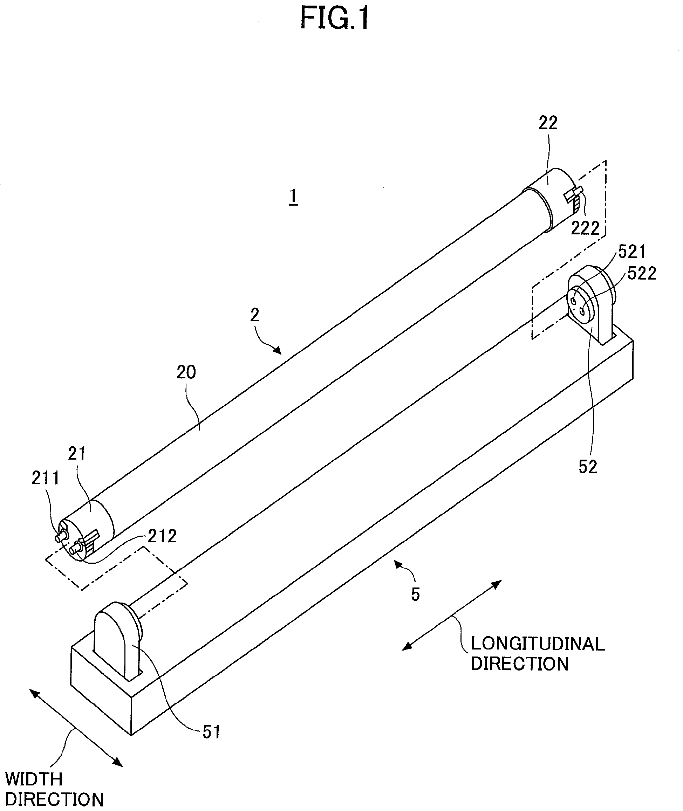

Fig. 1 is a perspective view illustrating an appearance of an illumination apparatus 1 according to a first embodiment. Referring to Fig. 1, the illumination apparatus 1 includes an illumination lamp 2 and an illumination fixture 5 which removably connects the illumination lamp 2.

The illumination lamp 2 includes a translucent unit 20 and caps 21 and 22. The translucent unit 20 includes a member made of light-transmissive resin or glass through which light emitted from an embedded light source (an LED module 27 which will be described later) is transmitted, which member is sealed by the cap 21 disposed at one end and the cap 22 disposed at the other end. The translucent unit 20 may be, for example, straight tubular.

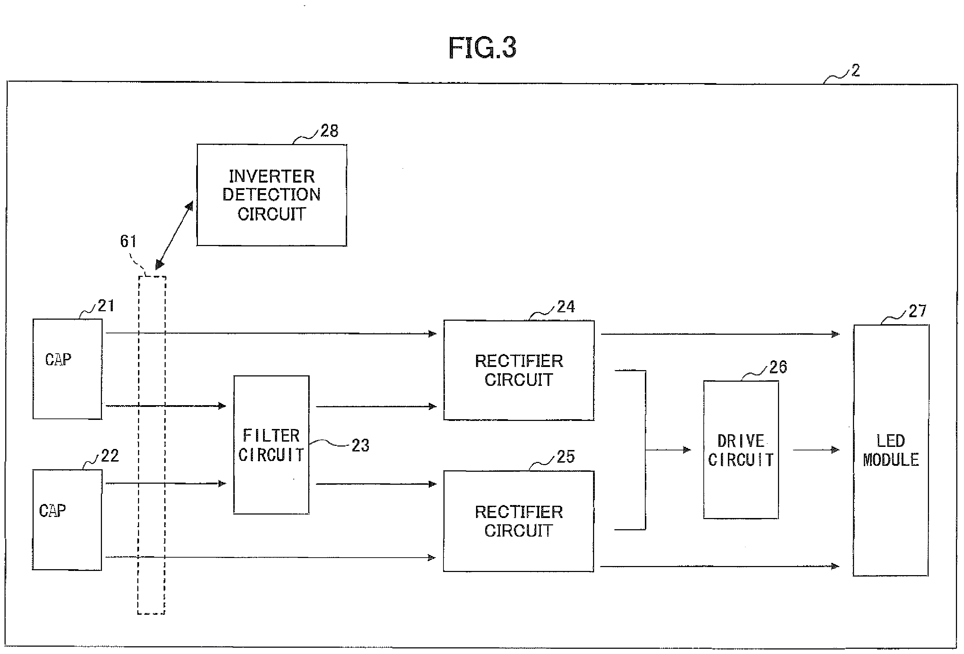

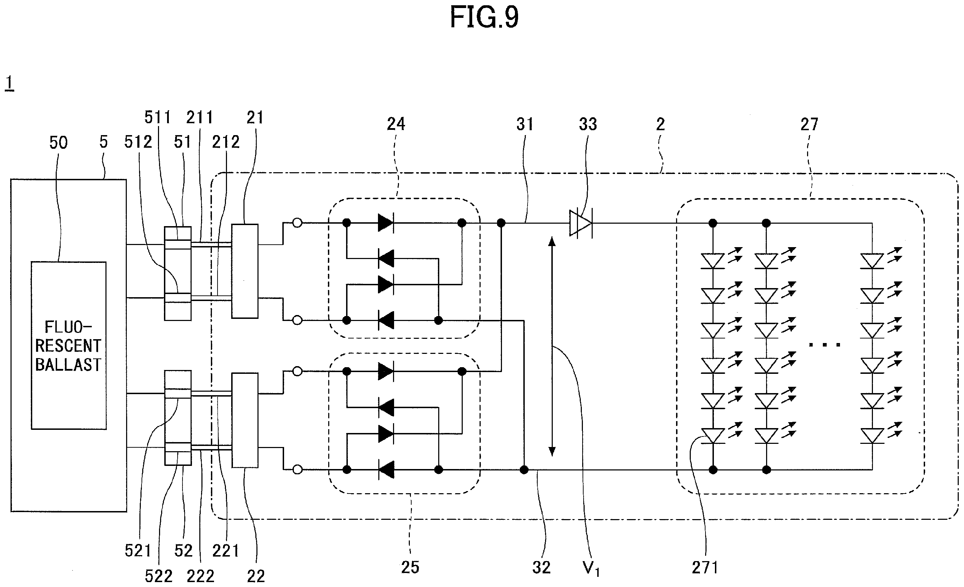

The cap 21 includes round terminals 211 and 212. Similarly, the cap 22 includes round terminals 221 and 222. Some of the terminals, however, are not shown in Fig. 1 (refer to Fig. 9 which will be described later). It should be noted that an electric circuit is disposed in the translucent unit 20 (refer to Fig. 3 which will be described later).

The illumination fixture 5 includes a fluorescent ballast 50 (refer to Fig. 9), sockets 51 and 52 to which the illumination lamp 2 can be removably attached, and is connectable to commercial AC power. The commercial AC power frequency is, for example, 50 Hz or 60 Hz. The commercial AC power is supplied to the fluorescent ballast 50.

The fluorescent ballast 50 may be, for example, a well-known fluorescent glow ballast, a fluorescent rapid ballast, an inverter ballast for fluorescent lamps, or the like. The illumination lamp 2 may be, however, directly connectable to the commercial AC power, and, in this case, the fluorescent ballast 50 is not needed. In this way, the illumination lamp 2 may be connectable to any one of the fluorescent glow ballast, the fluorescent rapid ballast, the inverter ballast for fluorescent lamps and the commercial AC power.

The socket 51 includes concave terminals 511 and 512. Similarly, the socket 52 includes concave terminals 521 and 522. Some of the terminals, however, are not shown in Fig. 1 (refer to Fig. 9 which will be described later).

The terminals 211 and 212 of the cap 21 of the illumination lamp 2 are inserted into, engaged with, and electrically connected to the terminals 511 and 512 of the socket 51 of the illumination fixture 5. Similarly, the terminals 221 and 222 of the cap 22 of the illumination lamp 2 are inserted into, engaged with, and electrically connected to the terminals 521 and 522 of the socket 52 of the illumination fixture 5.

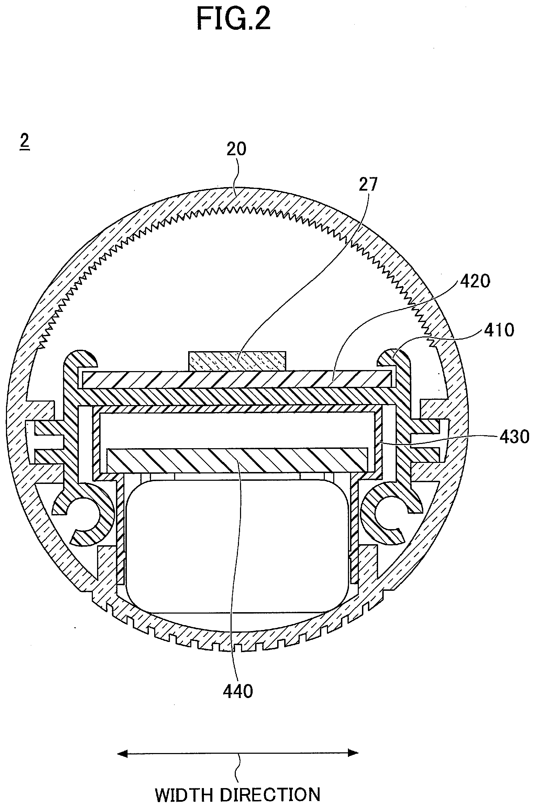

Fig. 2 is a cross-section view illustrating an illumination lamp 2 according to the first embodiment. As shown in Fig. 2, in the illumination lamp 2, a frame 410 is fixed inside the translucent unit 20. An LED substrate 420 on which an LED module 27 is mounted is removably installed on one side of the frame 410. Further, a holder 430 is disposed on another side of the frame 410. A substrate 440 on which rectifier circuits 24 and 25, a drive circuit 26, etc., are mounted is removably installed in the holder 430.

Cross-sectional shapes of the frame 410 and the holder 430 are substantially the same in the longitudinal direction, and the frame 410 and the holder 430 can be inserted into the translucent unit 20 by sliding them in the longitudinal direction from an end of the translucent unit 20 into inside the translucent unit 20. Similarly, cross-sectional shapes of the LED substrate 420 and the substrate 440 are substantially the same in the longitudinal direction, and the LED substrate 420 and the DRV substrate 440 can be inserted into the translucent unit 20 by sliding them in the longitudinal direction from an end of the translucent unit 20 into inside the translucent unit 20.

By having the holder 430 between the LED substrate 420 and the substrate 440, heat of the substrate 440 is not easily transferred to the LED substrate 420, As a result, influence of the heat given to LEDs of the LED module 27 becomes substantially uniform for all LEDs. Therefore, a problem can be prevented in which service lives of the LEDs partially become short as time passes.

In this way, the shape of the illumination lamp 2 is similar to a straight tubular fluorescent lamp and is easily exchangeable with an existing fluorescent lamp attached to the illumination fixture 5. The shape of the illumination lamp 2, however, may not be necessarily similar to the existing fluorescent lamp. For example, the cross-sectional shape of the translucent unit 20 may not be circular and may be semicircular, or the like.

Fig. 3 is a drawing illustrating circuit blocks of an illumination lamp 2 according to the first embodiment. Referring to Fig. 3, the illumination lamp 2 includes as major units the caps 21 and 22, a filter circuit 23, the rectifier circuits 24 and 25, the drive circuit 26, an LED module 27 and an inverter detection circuit 28.

The filter circuit 23 is an EMI countermeasure filter which is a circuit for reducing electromagnetic noise emitted by the illumination lamp 2. The filter circuit 23 may be a circuit in which, for example, an inter-line capacitor (X-capacitor), a versus-ground capacitor (Y-capacitor), a common mode coil, a normal mode coil, and the like, are connected in series or in parallel. The illumination lamp 2 is capable of reducing electromagnetic noise by including the filter circuit 23, and satisfies the EMI (ElectroMagnetic Interference) standards.

It should be noted that the filter circuit 23 is configured to be by-passed using a switching circuit 61. The switching circuit 61 may be configured to include, for example, a relay or a semiconductor switch (e.g., FET).

The rectifier circuits 24 and 25 are circuits for rectifying AC voltages supplied directly from the caps 21 and 22, or via the filter circuit 23, and supplying the rectified voltages to the LED module 27 via the drive circuit 26.

The drive circuit 26 is a circuit for driving the LED module 27 which includes a plurality of light emitting diodes. The drive circuit 26 may be configured to include, for example, a buck-boost circuit, a constant current circuit, or the like. By including the drive circuit 26, it becomes possible to supply appropriate current not exceeding the rated current to the LED module 27 even when the voltages supplied from the rectifier circuits 24 and 25 may vary, thereby a failure of the LED module 27 can be avoided and power saving can be achieved.

The illumination lamp 2 is configured to be connectable to any one of the fluorescent glow ballast, the fluorescent rapid ballast, the inverter ballast for fluorescent lamps and the commercial AC power and capable of selecting circuits for use depending on the connected target.

The inverter detection circuit 28 is a circuit for detecting whether the fluorescent ballast 50 included in the illumination fixture 5 is an inverter ballast for fluorescent lamps when the illumination lamp 2 is connected to the illumination fixture 5 and powered. In the case where the fluorescent ballast 50 is an inverter ballast for fluorescent lamps, the frequency of a signal input to the illumination lamp 2 from the fluorescent ballast 50 is a high frequency on the order of several tens KHz.

On the other hand, in the case where the fluorescent ballast 50 is any one of the fluorescent glow ballast, the fluorescent rapid ballast, and the commercial AC power, the frequency of a signal input from the fluorescent ballast 50 (or directly from the commercial AC power) to the illumination lamp 2 is a low frequency on the order of 50 to 60 Hz. Therefore, the inverter detection circuit 28 can detect whether the fluorescent ballast 50 included in the illumination fixture 5 is an inverter ballast for fluorescent lamps based on, for example, the frequency of a signal input to the illumination lamp 2.

In the case where the inverter detection circuit 28 detects that the fluorescent ballast 50 included in the illumination fixture 5 is an inverter ballast for fluorescent lamps, the filter circuit 23 is by-passed by the switching circuit 61. Further, a switching circuit 33, which will be described later, becomes effective only in a case where it is detected that the fluorescent ballast 50 is an inverter ballast for fluorescent lamps, and is by-passed by the switching circuit 61 in other cases.

In other words, in the case where the inverter detection circuit 28 detects that the fluorescent ballast 50 included in the illumination fixture 5 is an inverter ballast for fluorescent lamps, the signal input to the illumination lamp 2 from the inverter ballast for fluorescent lamps via the caps 21 and 22 is, by by-passing the filter circuit 23, supplied to the rectifier circuits 24 and 25. Then, the outputs of the rectifier circuits 24 and 25 are supplied to the LED module 27 through the switching circuit 33 (the drive circuit 26 is by-passed).

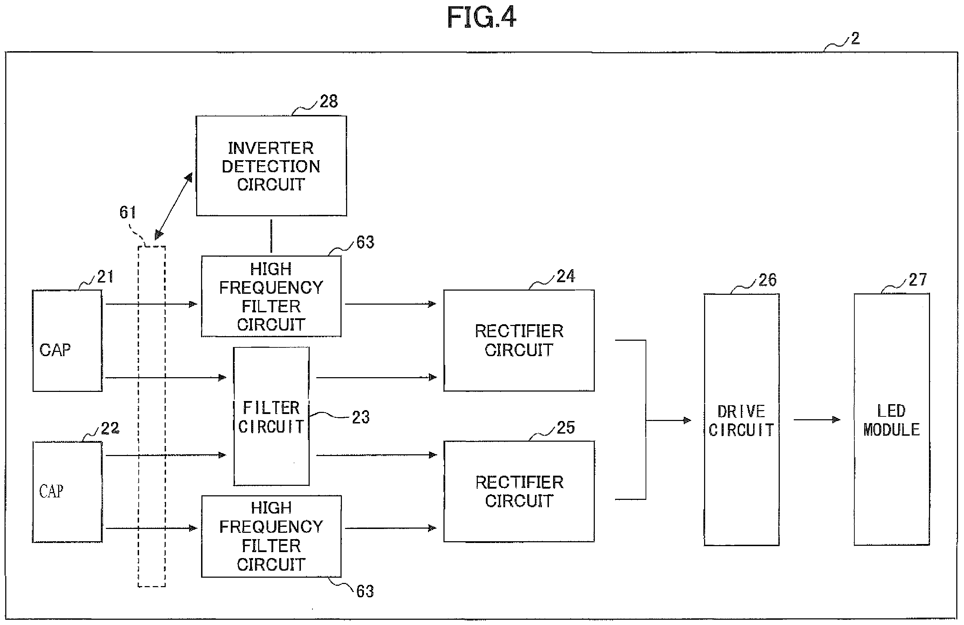

Further, as shown in Fig. 4, high frequency filter circuits 63 may be disposed separately from the filter circuit 23. Furthermore, in the case where the inverter detection circuit 28 detects that the fluorescent ballast 50 included in the illumination fixture 5 is an inverter ballast for fluorescent lamps, the outputs of the caps 21 and 22 may, by using the switching circuit 61, pass through the high frequency filter circuits 63. As a result, even if the filter circuit 23 is by-passed, an EMI noise problem does not occur and it becomes possible to provide appropriate current not exceeding the rated current to the LED module 27. Also, there may be a case where the fluorescent ballast 50 performs a function corresponding to the filter circuits.

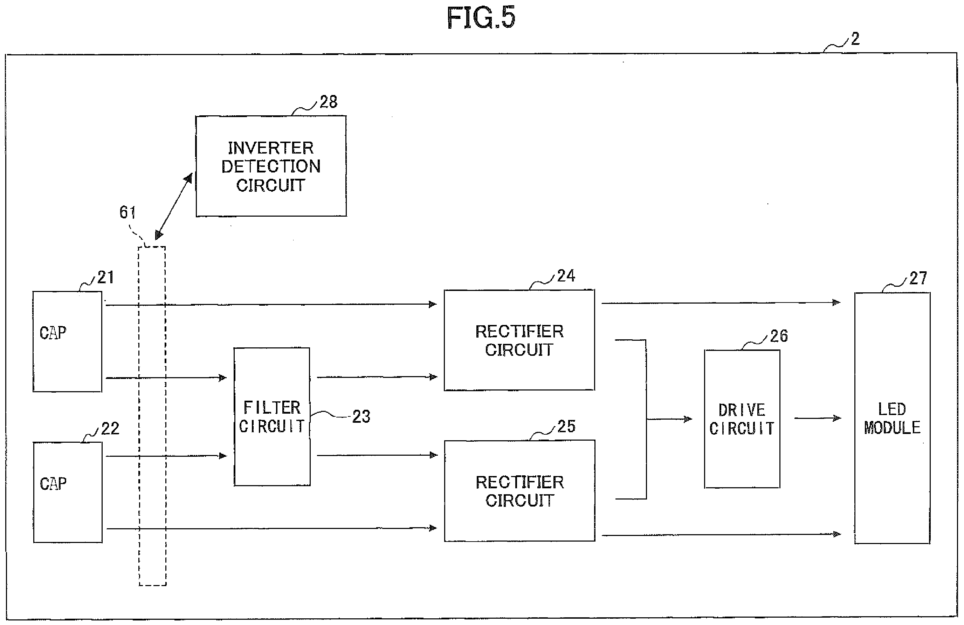

Furthermore, as shown in Fig. 5, the drive circuit 26 may be capable of being by-passed by a switching circuit. The switching circuit may be configured to include, for example, a relay or a semiconductor switch (e.g., FET). In the case where the filter circuit 23 is by-passed by using the switching circuit 61, the outputs of the rectifier circuits 24 and 25 are, by by-passing the drive circuit 26, supplied to the LED module 27. It should be noted that in the illumination lamp 2 in Fig. 5, in the case where the inverter detection circuit 28 detects that the fluorescent ballast 50 included in the illumination fixture 5 is an inverter ballast for fluorescent lamps, the outputs of the caps 21 and 22 may, by using the switching circuit 61, pass through the high frequency filter circuits 63.

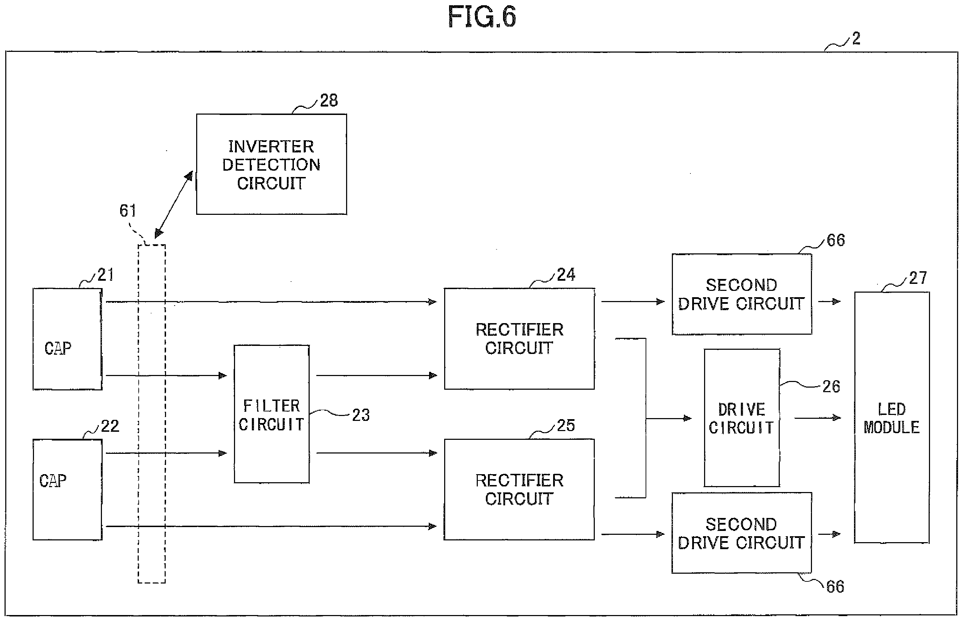

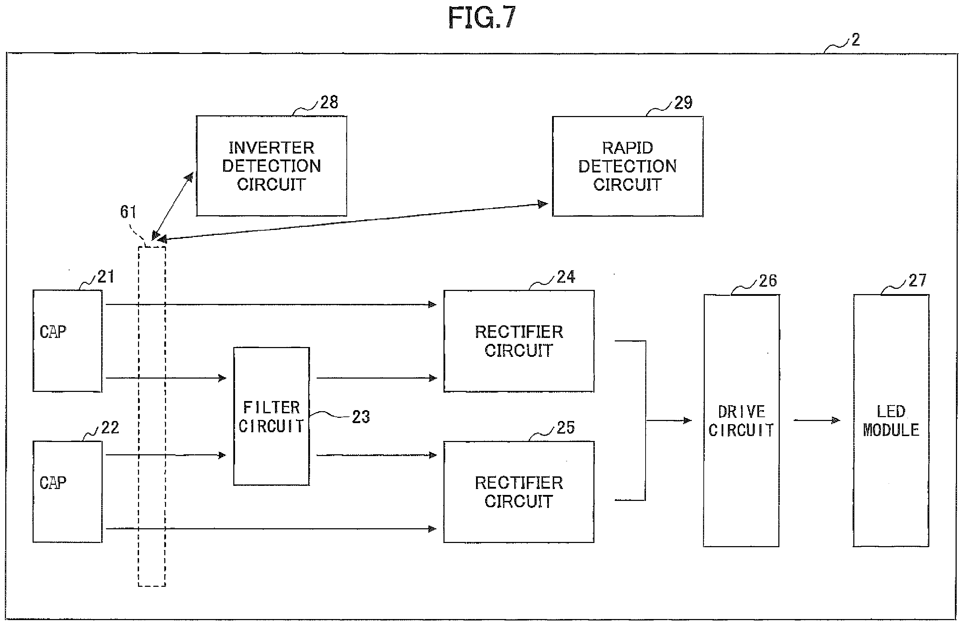

Further, as shown in Fig. 6, second drive circuits 66 may be disposed separately from the drive circuit 26. Furthermore, as shown in Fig. 7, the illumination lamp 2 may be configured to include a rapid detection circuit 29. The rapid detection circuit 29 is a circuit for detecting whether the fluorescent ballast 50 included in the illumination fixture 5 is a fluorescent rapid ballast when the illumination lamp 2 is connected to the illumination fixture 5 and powered.

For example, in the case where the rapid detection circuit 29 detects that the fluorescent ballast 50 included in the illumination fixture 5 is a fluorescent rapid ballast, the filter circuit 23 and the drive circuit 26 may not be by-passed, but the specification of the drive circuit 26 may be changed.

It should be noted that there may be a case where the inverter detection circuit 28 does not detect that the fluorescent ballast 50 is an inverter ballast for fluorescent lamps and the rapid detection circuit 29 does not detect that the fluorescent ballast 50 is a fluorescent rapid ballast. In this case, it is determined that the fluorescent ballast 50 is a fluorescent glow ballast or the illumination lamp 2 is not connected through the fluorescent ballast 50, but directly connected to the commercial AC power, and the signals input to the illumination lamp 2 through the caps 21 and 22 are supplied to the rectifier circuits 24 and 25 via the filter circuit 23. Then, the outputs of the rectifier circuits 24 and 25 are supplied to the LED module 27 via the drive circuit 26. Also, regarding the specification of the drive circuit 26, a specification which fits the fluorescent glow ballast and the commercial AC power may be selected.

It should be noted that in the illumination lamp 2 in Fig. 6 and Fig. 7, in the case where the inverter detection circuit 28 detects that the fluorescent ballast 50 included in the illumination fixture 5 is an inverter ballast for fluorescent lamps, the outputs of the caps 21 and 22 may, by using the switching circuit 61, pass through the high frequency filter circuits 63.

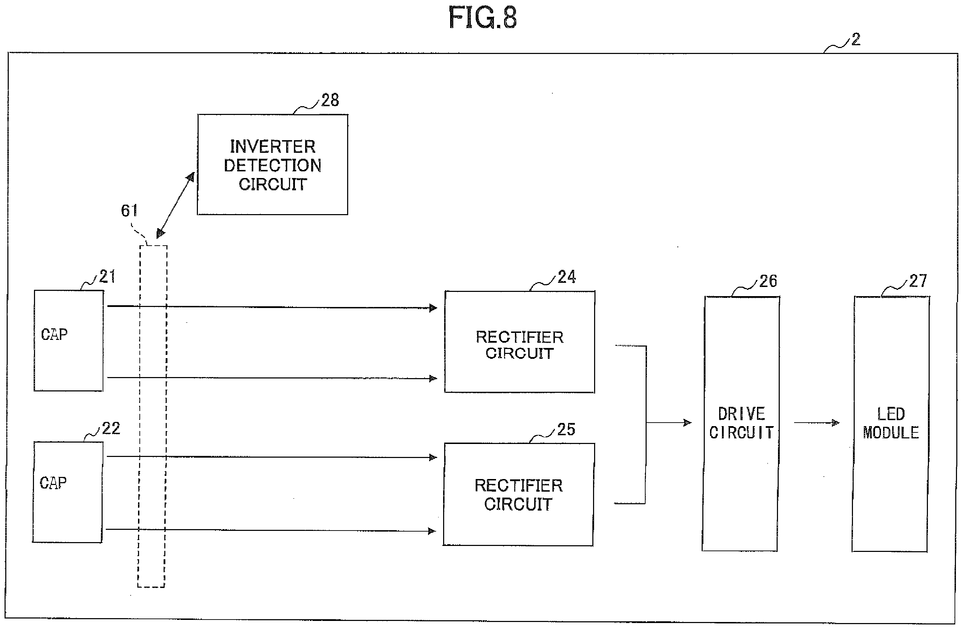

Further, as shown in Fig. 8, the filter circuit 23 and the high frequency filter circuits 63 may not be included.

Referring to Figs. 3 through 8, an outline of overall operations of the circuit blocks included in the illumination lamp 2 has been described above. Next, referring to Fig. 9, characteristic operations of the illumination lamp 2 will be described. It should be noted that, in Fig. 9, wire connections only for the major circuits of the illumination lamp 2 according to the embodiment are shown and an illustration of wire connections for portions not related to the characteristic operations is omitted.

In Fig. 9, the terminals 211 and 212 of the cap 21 of the
illumination lamp 2 are inserted, engaged with, and electrically connected to the respective terminals 511 and 512 of the socket 51 of the illumination fixture 5. Similarly, the terminals 221 and 222 of the cap 22 of the illumination lamp 2 are inserted into, engaged with, and electrically connected to the respective terminals 521 and 522 of the socket 52 of the illumination fixture 5.

The rectifier circuits 24 and 25 are, for example, bridge type full-wave rectifier circuits configured to include a so-called fast recovery diode whose reverse recovery time is short. In the case where the fluorescent ballast 50 is other than an inverter ballast for fluorescent lamps, the rectifier circuits 24 and 25 rectify the AC voltages which are input from the caps 21 and 22 through the filter circuits 23 (not shown in Fig. 9). Further, a rectified voltage V₁ rectified by the rectifier circuits 24 and 25 is, through the plus side wire connection 31 and the minus side wire connection 32 which are output units of the rectifier circuits 24 and 25, and through the drive circuit 26 (not shown in Fig. 9), supplied to the LED module 27.

On the other hand, in the case where the fluorescent ballast 50 is an inverter ballast for fluorescent lamps, the rectifier circuits 24 and 25 rectify the AC voltage directly input from the inverter ballast for fluorescent lamps without passing through the filter circuit 23. Further, the rectified voltage V₁ rectified by the rectifier circuits 24 and 25 is output to the plus side wire connection 31 and the minus side wire connection 32, and, through the switching circuit 33 (the drive circuit 26 is by-passed), supplied to the LED module 27.

It should be noted that the switching circuit 33 is inserted in the plus side wire connection 31, and is a circuit a state of which is switched between a conductive state and a non-conductive state according to the voltage V₁ (voltage between the plus side wire connection 31 and the minus side wire connection 32) rectified by the rectifier circuits 24 and 25. Specifically, when the voltage V₁ is less than a predetermined voltage, the switching circuit 33 is non-conductive and does not allow the current to flow in the LED module 27. When the voltage V₁ is equal to or more than the predetermined voltage, the switching circuit 33 is conductive and allows the current to flow in the LED module 27; and after the switching circuit 33 become conductive, it keeps being conductive even if the voltage V₁ changes to be less than the predetermined voltage.

The switching circuit 33 can be by-passed by using the switching circuit 61. In Fig. 9, as an example, the switching circuit 33 includes a silicon diode alternating current bi-directional switch (SIDAC (registered trademark)). It should be noted that the switching circuit 33 may include not only a single switching element like a SIDAC but also multiple elements.

For example, the switching circuit 33 may include a detection unit for detecting the voltage V₁ and a switch unit for switching between a conductive state and a non-conductive state of the plus side wire connection 31. The circuit switches to a conductive state when the voltage V₁ is equal to or more than a predetermined voltage, and continues in a conductive state even if the voltage V₁ becomes less than the predetermined voltage after the voltage V₁ has become equal to or more than the predetermined voltage. Further, a part of the circuit may include an element such as a thyristor or a triode for alternating current (TRIAC).

The LED module 27 includes a plurality of serial connection units in which a plurality of light emitting diodes 271 are connected in series between the plus side wire connection 31 and the minus side wire connection 32 (6 light emitting diodes 271 are connected in series in Fig. 9). Further, the serial connection units are connected in parallel. When the switching circuit 33 switches to a conductive state, current flows in the light emitting diodes 271, and light is emitted.

It should be noted that in the case where the fluorescent ballast 50 is an inverter ballast for fluorescent lamps, at the startup of the inverter ballast for fluorescent lamps, a low voltage (voltage V₁ = about 5 to 10 V) for preheating is applied, and after that, the voltage V₁ becomes a little less than 200 V. Afterwards, the voltage V₁ gradually increases to a little more than 200 V, and transitions to a stable operation. In the stable operation of a fluorescent lamp, a voltage a little more than 200 V is continuously applied.

There is an inverter ballast for fluorescent lamps which performs an anomaly detection at the startup. In the case where a fluorescent lamp is connected to an inverter ballast for fluorescent lamps, current does not flow in the fluorescent lamp. Therefore, in the case where an illumination lamp 2 is connected to the inverter ballast for fluorescent lamps, it is necessary to make the same things happen as in the case where a fluorescent lamp is connected to the inverter ballast for fluorescent lamps. If different things happen, the inverter ballast for fluorescent lamps may detect an anomaly, a protection operation may be performed, and the illumination lamp 2 may not be turned on.

Therefore, in order to make the same things happen (that is, in order not to make the current flow), the switching circuit 33 is included. Further, the predetermined voltage with which the switching circuit 33 switches to a conductive state is set greater than a voltage the inverter ballast for fluorescent lamps outputs at the startup, and less than a voltage the inverter ballast for fluorescent lamps outputs when it transitions from the startup operation to the stable operation.

For example, as the switching circuit 33, a SIDAC, a breakover voltage of which is 200 V, may be used. In this case, when the voltage V₁ is less than the SIDAC breakover voltage, 200 V, current does not flow from the inverter ballast for fluorescent lamps to the rectifier circuits 24 and 25. When the voltage V₁ is equal to or more than 200 V, current flows from the inverter ballast for fluorescent lamps to the rectifier circuits 24 and 25.

The voltage V₁ applied by the inverter ballast for fluorescent lamps at the startup is a little less than 200 V at most. Therefore, the current does not flow from the inverter ballast for fluorescent lamps to the rectifier circuits 24 and 25 at the startup, which is the same behavior as in the case where a fluorescent lamp is connected to the inverter ballast for fluorescent lamps. As a result, a problem can be solved in which the illumination lamp 2 is not turned on.

Afterwards, the voltage V₁ applied by the inverter ballast for fluorescent lamps gradually increases to a little more than 200 V that is the breakover voltage of the SIDAC, and transitions to a stable operation. When the voltage V₁ is equal to or more than the breakover voltage of the SIDAC, current flows from the inverter ballast for fluorescent lamps to the rectifier circuits 24 and 25, and the current is provided to the LED module 27 through the SIDAC. At this time, the voltage V₁ applied by the inverter ballast for fluorescent lamps decreases to a voltage in which a voltage-drop voltage at the SIDAC (a little less than 1 V) is added to a sum of the forward voltages of the light emitting diodes 271 included in each of the serial connection units of the LED module 27.

As described above, in the illumination lamp 2 according to the first embodiment, by using the switching circuit 33, it becomes possible to avoid a situation in which the illumination lamp 2 is not turned on by having an anomaly detected by the anomaly detection performed at the startup of the inverter ballast for fluorescent lamps. In this way, the LED module 27 is capable of providing stable illumination.

Further, the sum of the forward voltages of the light emitting diodes 271 included in each of the serial connection units of the LED module 27 is set to be a voltage (e.g., about 80 V) less than a voltage normally applied at the stable operation of a fluorescent lamp (a little more than 200 V). Therefore, it becomes possible to make a voltage when the inverter ballast for fluorescent lamps transitions to a stable operation (e.g., 80 V + voltage-drop voltage at the SIDAC) less than a voltage of a case where a fluorescent lamp is used (about a little more than 200 V), and thus, energy saving can be achieved.

It should be noted that it is preferable that, in the case where the switching circuit 33 is a SIDAC, the breakover voltage be about 200 V. The more the breakover voltage decreases from 200 V, the more increases the likelihood of the breakover voltage being less than a voltage output by the inverter ballast for fluorescent lamps at the startup, and the protection operation is performed as a result of anomaly detection of the inverter ballast for fluorescent lamps. Further, the more the breakover voltage increases above 200 V, the more increases the likelihood of the voltage output by the inverter ballast for fluorescent lamps when it transitions from the startup to a stable operation cannot exceed the breakover voltage, and the current is not provided to the illumination lamp 2 and the illumination lamp 2 is not turned on.

For example, in the above embodiments, as an example of the illumination lamp, an illumination lamp is shown, which is capable of connecting to any one of the fluorescent glow ballast, the fluorescent rapid ballast, the fluorescent inverter ballast and the commercial AC power. It should be noted that the present invention can be applied to an illumination lamp capable of being connected to at least an inverter ballast for fluorescent lamps. In other words, the present invention can be applied to an illumination lamp which can be connected to only the inverter ballast for fluorescent lamps, and also applied to an illumination lamp which can be connected to not only the inverter ballast for fluorescent lamps but also other fluorescent ballasts or the commercial AC power.

Further, in the case of the illumination lamp capable of being connected to only an inverter ballast for fluorescent lamps, only necessary units in the circuit blocks shown in FIGs. 3 through 8 may be included. For example, the inverter detection circuit 28, the rapid detection circuit 29, the filter circuit 23, the drive circuit 26 or the like, may not be included.

The present invention is not limited to the specifically disclosed embodiments, and variations and modifications may be made.

The invention is defined by the following claims.

## Claims

1. An illumination lamp (2) connectable to an inverter ballast (50) for fluorescent lamps, the illumination lamp (2) comprising an illumination control circuit having:
a light emitting diode (27);
a rectifier circuit (24, 25) configured to rectify an AC voltage supplied by the inverter ballast (50) for fluorescent lamps and supply the rectified voltage to the light emitting diode (27); and
a switching circuit (33);
**characterized in that**:
the switching circuit (33) is inserted in the plus side wire connection and is configured to be in a non-conductive state when the rectified voltage from the rectifier circuit (24, 25) is less than a predetermined voltage and not allow current to flow in the light emitting diode (27), to switch to a conductive state when the rectified voltage from the rectifier circuit (24, 25) is equal to or greater than the predetermined voltage and allow the current to flow in the light emitting diode (27), and to continue in the conductive state even when the rectified voltage changes to be less than the predetermined voltage after switching to the conductive state.

2. The illumination lamp (2) according to claim 1, wherein
after the switching circuit (33) has switched to the conductive state, the rectified voltage decreases to a voltage in which a voltage-drop voltage at the switching circuit (33) is added to a forward direction voltage of the light emitting diode (27).

3. The illumination lamp (2) according to claim 1, wherein
the predetermined voltage is set greater than a voltage output by the inverter ballast (50) for fluorescent lamps at a startup and less than a voltage output by the inverter ballast (50) for fluorescent lamps when the inverter ballast (50) for fluorescent lamps transitions from a startup operation to a stable operation.

4. The illumination lamp (2) according to claim 2, wherein the predetermined voltage is 200 V.

5. The illumination lamp (2) according to claim 3, wherein the predetermined voltage is 200 V.

6. The illumination lamp (2) according to claim 1, wherein the switching circuit (33) includes a single switching element.

7. An illumination apparatus (1) comprising:
the illumination lamp (2) according to claim 1; and
an illumination fixture (5) the illumination lamp (2) is attached to.

## Patentansprüche

1. Beleuchtungslampe (2), die mit einem Wechselrichter-Vorschaltgerät (50) für Leuchtstofflampen verbindbar ist, wobei die Beleuchtungslampe (2) eine Beleuchtungssteuerschaltung umfasst, die Folgendes aufweist:
eine lichtemittierende Diode (27);
eine Gleichrichterschaltung (24, 25), die konfiguriert ist, eine Wechselspannung, die durch das Wechselrichter-Vorschaltgerät (50) für Leuchtstofflampen zugeführt wird, gleichzurichten und die gleichgerichtete Spannung der lichtemittierenden Diode (27) zuzuführen; und
einen Schaltkreis (33);
**dadurch gekennzeichnet, dass**:
der Schaltkreis (33) in der plusseitigen Drahtverbindung eingefügt ist und konfiguriert ist, in einem nichtleitenden Zustand zu sein, wenn die gleichgerichtete Spannung von der Gleichrichterschaltung (24, 25) geringer als eine vorbestimmte Spannung ist und nicht zuzulassen, dass ein Strom in die lichtemittierende Diode (27) fließt, in einen leitenden Zustand zu schalten, wenn die gleichgerichtete Spannung von der Gleichrichterschaltung (24, 25) gleich oder größer als die vorbestimmte Spannung ist und zuzulassen, dass der Strom in die lichtemittierende Diode (27) fließt, und in dem leitenden Zustand zu verbleiben, selbst wenn sich die gleichgerichtete Spannung auf geringer als die vorbestimmte Spannung nach dem Schalten in den leitenden Zustand ändert.

2. Beleuchtungslampe (2) nach Anspruch 1, wobei
nachdem der Schaltkreis (33) in den leitenden Zustand geschaltet hat, die gleichgerichtete Spannung zu einer Spannung abnimmt, bei der eine Spannungsabfallspannung an dem Schaltkreis (33) einer Vorwärtsrichtungsspannung der lichtemittierenden Diode (27) hinzugefügt wird.

3. Beleuchtungslampe (2) nach Anspruch 1, wobei
die vorbestimmte Spannung größer als eine Spannung, die durch das Wechselrichter-Vorschaltgerät (50) für Leuchtstofflampen bei einer Inbetriebnahme ausgegeben wird, und geringer als eine Spannung, die durch das Wechselrichter-Vorschaltgerät (50) für Leuchtstofflampen ausgegeben wird, wenn das Wechselrichter-Vorschaltgerät (50) für Leuchtstofflampen von einer Inbetriebnahme zu einem stabilen Betrieb übergeht, festgelegt wird.

4. Beleuchtungslampe (2) nach Anspruch 2, wobei die vorbestimmte Spannung 200 V ist.

5. Beleuchtungslampe (2) nach Anspruch 3, wobei die vorbestimmte Spannung 200 V ist.

6. Beleuchtungslampe (2) nach Anspruch 1, wobei
der Schaltkreis (33) ein einzelnes Schaltelement beinhaltet.

7. Beleuchtungsvorrichtung (1), umfassend:
die Beleuchtungslampe (2) nach Anspruch 1; und
eine Beleuchtungsbefestigung (5), an der die Beleuchtungslampe (2) angebracht ist.

## Revendications

1. Lampe d'éclairage (2) pouvant être raccordée à un ballast inverseur (50) pour lampes fluorescentes, la lampe d'éclairage (2) comprenant un circuit de commande d'éclairage comportant :
une diode électroluminescente (27) ;
un circuit redresseur (24, 25) conçu pour redresser une tension CA fournie par le ballast inverseur (50) pour lampes fluorescentes et fournir la tension redressée à la diode électroluminescente (27) ; et
un circuit de commutation (33) ;
**caractérisée en ce que** :
le circuit de commutation (33) est inséré dans la connexion de fil côté positif et est conçu pour être dans un état non conducteur lorsque la tension redressée provenant du circuit redresseur (24, 25) est inférieure à une tension prédéterminée et ne pas permettre au courant de circuler dans la diode électroluminescente (27), pour commuter vers un état conducteur lorsque la tension redressée provenant du circuit redresseur (24, 25) est égale ou supérieure à la tension prédéterminée et permettre au courant de circuler dans la diode électroluminescente (27), et pour continuer dans l'état conducteur même lorsque la tension redressée change pour être inférieure à la tension prédéterminée après la commutation vers un état conducteur.

2. Lampe d'éclairage (2) selon la revendication 1, dans laquelle
après que le circuit de commutation (33) a commuté vers l'état conducteur, la tension redressée diminue vers une tension dans laquelle une tension de chute de tension au niveau du circuit de commutation (33) est ajoutée à une tension dans le sens direct de la diode électroluminescente (27).

3. Lampe d'éclairage (2) selon la revendication 1, dans laquelle
la tension prédéterminée est définie comme supérieure à une tension fournie en sortie par le ballast inverseur (50) pour lampes fluorescentes à un démarrage et inférieure à une tension émise en sortie par le ballast inverseur (50) pour lampes fluorescentes lorsque le ballast inverseur (50) pour lampes fluorescentes passe d'une opération de démarrage à une opération stable.

4. Lampe d'éclairage (2) selon la revendication 2, dans laquelle la tension prédéterminée est de 200 V.

5. Lampe d'éclairage (2) selon la revendication 3, dans laquelle la tension prédéterminée est de 200 V.

6. Lampe d'éclairage (2) selon la revendication 1, dans laquelle le circuit de commutation (33) comprend un seul élément de commutation.

7. Appareil d'éclairage (1) comprenant :
la lampe d'éclairage (2) selon la revendication 1 ; et
un appareil d'éclairage (5) auquel la lampe d'éclairage (2) est attachée.
